**Europäisches Patentamt**

**European Patent Office**

**Office européen des brevets**

(11) Numéro de publication: **0 258 107 B1**

(12) **FASCICULE DE BREVET EUROPEEN**

(45) Date de publication du fascicule du brevet:
04.04.90

(51) Int. Cl.⁴: **F16L 1/24**, E02D 29/06

(21) Numéro de dépôt: **87401786.6**

(22) Date de dépôt: **30.07.87**

(54) **Structure de recouvrement destinée notamment à être mise en place sur une conduite ou analogue déposée sur le fond sous-marin.**

(30) Priorité: **30.07.86 FR 8611036**

(43) Date de publication de la demande:
**02.03.88 Bulletin 88/9**

(45) Mention de la délivrance du brevet:
**04.04.90 Bulletin 90/14**

(84) Etats contractants désignés:
**DE ES GB IT NL SE**

(56) Documents cités:
**EP-A- 0 091 531**
**DE-A- 2 836 189**
**US-A- 3 779 027**
**US-A- 3 793 845**

(73) Titulaire: **COFLEXIP Société Anonyme, 23 Avenue de Neuilly, F-75116 Paris(FR)**

(72) Inventeur: **Rocher, Xavier, 26, rue du 4 Septembre, F-75002 Paris(FR)**
Inventeur: **Faure, Bruno, 10, rue Gambetta, F-92150 Suresnes(FR)**
Inventeur: **Legallais, Lucien, 1, rue d'Artois, F-78630 Orgeval(FR)**

(74) Mandataire: **Nony, Michel et al, Conseil en Brevets d'Invention 29 rue Cambacérès, F-75008 Paris(FR)**

## Description

La présente invention est relative à une structure de recouvrement destinée à être mise en place notamment sur des orgaines sous-marins de forme allongée en particulier sur une conduite ou analogue déposée sur le fond sous-marin.

La présente invention est également relative à un dispositif permettant la mise en place d'une telle structure.

Il est connu depuis longtemps et décrit par exemple dans le brevet britannique 1 585 170 de mettre en place sur des conduites déposées sur le fond sousmarin, des sacs que l'on remplit d'un matériau durcissable, tel que du ciment, pour immobiliser dans la mesure du possible les conduites sur le fond sousmarin.

Un tel procédé nécessite l'intervention de plongeurs, notamment pour le branchement et le débranchement des conduites d'injection de ciment.

On connaît par ailleurs par le brevet US 4 480 943 un procédé permettant de recouvrir en continu, en principe sans l'aide de plongeurs, une conduite ou analogue déposée sur le fond sous-marin en utilisant une nappe dont les extrémités longitudinales sont repliées et réunies par un dispositif de fermeture continue telle qu'une fermeture à glissière, la nappe repliée étant remplie d'un matériau injectable tel que du ciment puis déposée en continu sur la conduite à recouvrir.

L'expérience montre que des difficultés risquent d'apparaître dans la mise en oeuvre d'un tel procédé, notamment du fait de coincement qui peuvent se produire dans le dispositif de fermeture, nécessitant alors l'intervention de plongeurs en vue de rétablir le cycle normal de fonctionnement, ce qui va à l'encontre du but recherché.

La présente invention se propose de fournir une structure et un dispositif pour la mettre en place en évitant les inconvénients des systèmes antérieurs, toutes les phases de mise en place pouvant s'effectuer sans l'intervention de plongeurs et donc à des profondeurs de pose quelconques.

La structure selon l'invention se caractérise par le fait qu'elle comprend une pluralité d'éléments tubulaires aplatis, fermés, disposés en succession en étant réunis les uns aux autres par des moyens de fixation, de préférence à effort de rupture contrôlée, les différents éléments se recouvrant de préférence partiellement au voisinage de leurs extrémités longitudinales et chacun des éléments comportant au moins un orifice pour l'injection d'un matériau durcissable, notamment du ciment.

Du fait de sa conformation, la structure selon l'invention peut être stockée, soit sur tambour, soit repliée en accordéon dans un conteneur prévu à cet effet.

Dans un premier mode de réalisation de la structure selon l'invention, chacun des éléments tubulaires présente au voisinage d'une de ses extrémités longitudinales, dans l'une de ses faces, un orifice d'injection réalisé dans une plaque fixée sur l'élément à sa partie supérieure, agencée pour coopérer avec la tête d'un injecteur, ladite plaque comportant un clapet anti-retour. Dans une forme de réalisation avantageuse il est prévu un second orifice d'injection réalisé de la même manière au voisinage de l'autre extrémité longitudinale de l'élément.

De préférence, il est prévu au moins une paire de câbles de guidages longitudinaux reliant entre elles les plaques d'injection successives.

Dans un second mode de réalisation de la structure selon l'invention, chacun des éléments est solidaire d'au moins un tuyau muni à son extrémité d'un embout comportant un orifice d'injection et de préférence équipé d'un clapet anti-retour.

Dans ce mode de réalisation, les différents embouts sont disposés de préférence en une rangée sur ou au voisinage de l'organe de stockage de la structure.

Les éléments de la structure selon l'invention peuvent en outre être munis d'éléments pesants, latéraux, par exemple des lests en plomb disposés le long de chaque bord longitudinal de la structure.

Le dispositif selon l'invention pour la mise en place de la structure comprend, sur un châssis mobile sur le fond sous-marin, un organe d'entraînement, notamment à tambour moteur pour entraîner la structure depuis un organe de stockage tel qu'un conteneur ou un tambour monté également sur le châssis du dispositif, au moins un injecteur alimenté par une ligne d'alimentation en matériau durcissable, notamment en ciment, et apte à coopérer avec chacun des orifices d'injection de la structure pour le remplissage de celle-ci, des moyens étant prévus pour positionner successivement l'injecteur et chacun des orifices d'injection en regard les uns des autres et pour solidariser l'injecteur de l'orifice d'injection pendant la phase de remplissage.

Le dispositif selon l'invention est mis en oeuvre en déplaçant le châssis mobile le long de l'organe sous-marin à recouvrir, la structure selon l'invention étant progressivement déroulée à partir de l'organe de stockage et déposée en recouvrement de l'organe sous-marin. Le remplissage de la structure se fait de manière discontinue progressivement, par une succession d'opérations élémentaires, le châssis mobile étant immobilisé pour chaque injection pendant le temps nécessaire pour assurer la connexion de la ligne d'alimentation avec l'orifice d'injection et pour débiter la quantité convenable de matériau durcissable.

Dans un premier mode de réalisation, pour la mise en place de la structure dans laquelle chaque élément tubulaire comporte au moins une plaque d'injection, il est prévu sur le dispositif des moyens de guidage et de positionnement de chacune des plaques d'injection en regard de l'injecteur.

L'injecteur peut être fixe ou mobile en va et vient sensiblement perpendiculairement au sens de déplacement de la structure.

Dans un second mode de réalisation dans lequel il est prévu sur chacun des éléments de la structure au moins un tuyau muni d'un embout d'injection, les différents embouts étant montés alignés sur une structure de support, l'injecteur est avantageusement monté sur un chariot mobile sur des guides le long de ladite rangée de façon à être amené en regard de chacun des embouts successifs alignés, ledit injecteur étant en outre animé d'un mouvement d'avance axiale permettant, après remplissage d'un élément, d'éjecter de son support l'embout correspondant.

D'autres avantages et caractéristiques de l'invention apparaîtront à la lecteur de la description suivante d'exemples de réalisation nullement limitatifs en se référant au dessin annexé dans lequel :

- la figure 1 est une représentation schématique en élévation d'une structure de recouvrement selon un premier mode de réalisation de l'invention,
- la figure 2 est une vue schmématique partiellement en coupe montrant la disposition des éléments de la structure, l'injecteur étant positionné pour venir en contact avec la plaque d'injection pour le remplissage,
- la figure 3 est une vue schématique en élévation frontale et en coupe du poste d'injection du dispositif selon un premier mode de réalisation de l'invention,
- la figure 4 est une vue de dessus montrant l'arrivée d'un élément à remplir au poste d'injection, l'injecteur n'étant pas représenté pour plus de clarté,
- la figure 5 est une vue en élévation latérale schématique d'un dispositif selon l'invention,
- les figures 6 et 7 sont des vues en perspective schématique illustrant la position d'un élément à remplir en regard d'un dispositif d'injection selon un second mode de réalisation,
- la figure 8 est une vue analogue à la figure 1 d'un second mode de réalisation de structure de recouvrement selon l'invention,
- la figure 9 illustre le déroulement de la structure selon la figure 8 dans une première forme de réalisation,
- la figure 10 illustre schématiquement un injecteur utilisable pour le remplissage de la structure représentée aux figures 8 et 9,
- les figures 11a et 11b sont des vues en coupe correspondant à la figure 10 montrant deux positions relatives différentes de l'injecteur par rapport à un embout d'extrémité de tuyau d'un élément de la structure et,
- la figure 12 est une vue analogue à la figure 9 selon une variante de réalisation où le déroulement de la structure s'effectue à partir d'un tambour.

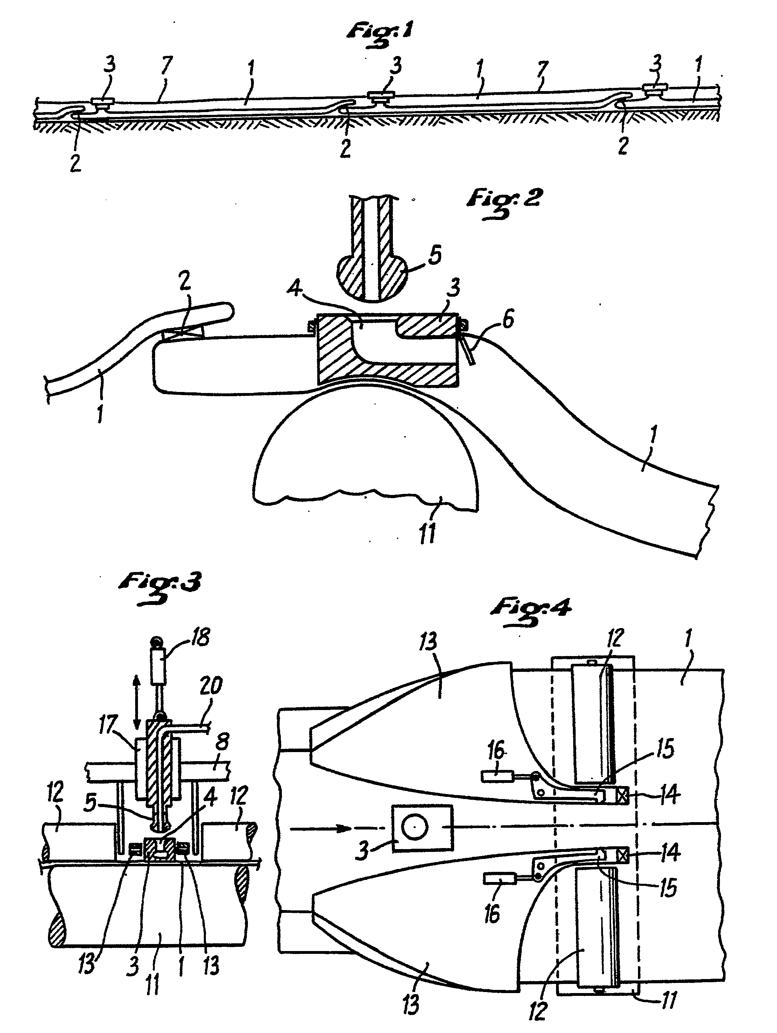

On se réfère tout d'abord aux figures 1 et 2. La structure selon l'invention comprend une pluralité d'éléments tubulaires aplatis 1, réalisés par exemple en toile perméable ou imperméable chacun des éléments tubulaires pouvant avoir par exemple une longueur comprise entre 2 m et 30 m et une largeur comprise en 0,5 et 4 m, une fois rempli de matériaux durcissables.

Les différents éléments tubulaires 1 sont disposés en chapelet et son réunis les uns aux autres au voisinage de leurs extrémités par des attaches 2 à charge de rupture contrôlée, par exemple de lanières raccordées par couture à l'aide d'un fil à charge de rupture connue.

Comme on le voit sur les figures 1 et 2, on réalise entre les éléments successifs 1, en forme de sacs, un recouvrement qui peut par exemple atteindre une longueur de 0,5 m.

En vue de leur remplissage en matériau fluide durcissable, notamment en ciment, chacun des éléments tubulaire 1, comporte au voisinage de sa partie arrière une plaque d'injection 3 définissant un orifice d'injection 4 sur lequel peut venir s'engager, comme cela sera décrit plus loin, la tête d'un injecteur 5.

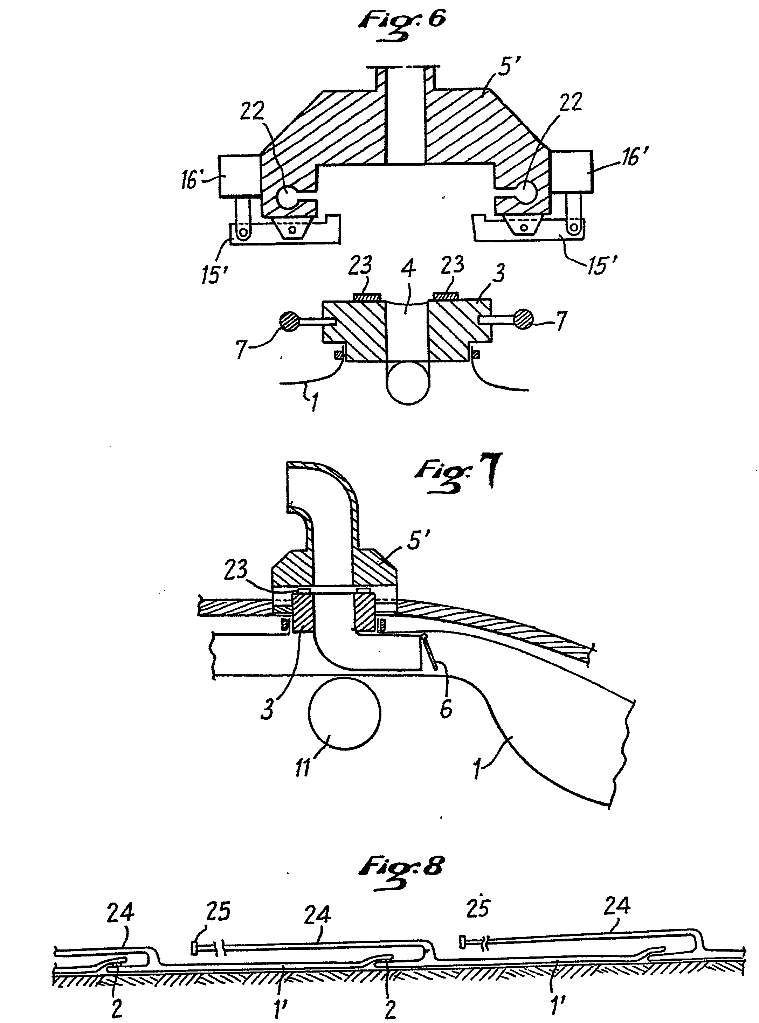

Il est prévu selon l'invention un dispositif destiné à empêcher un reflux du ciment injecté au travers de l'orifice d'injection 4, par exemple un clapet anti-retour 6. Les plaques 3 des différents éléments 1 peuvent être réunies par des câbles de guidage 7, parallèles, disposés de part et d'autre des plaques. Ce mode de réalisation est destiné à coopérer avec le dispositif des figures 6 et 7.

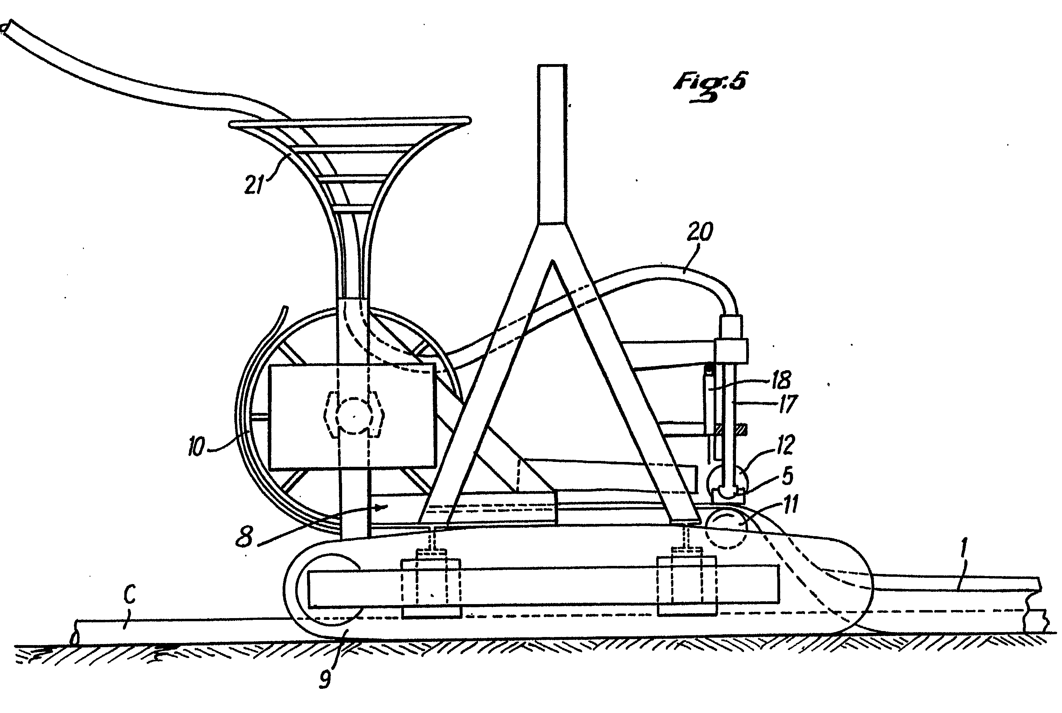

On se réfère maintenant plus particulièrement aux figures 3 à 5 qui illustrent un premier mode de réalisation de dispositif selon l'invention.

Comme on le voit sur la figure 5, le dispositif destiné à poser la structure de recouvrement d'une conduite C comprend un châssis 8 mobile sur le fond sous-marin en étant monté sur des chenilles 9, et étant commandé depuis un navire de surface et recevant depuis le navire de surface tous les fluides hydrauliques et électriques nécessaires à son fonctionnement.

Des caméras (non représentées) peuvent être montées sur le châssis du dispositif pour permettre la commande et le contrôle à partir de la surface de toutes les phases de mise en oeuvre du dispositif.

Dans le mode de réalisation représenté, la structure composée d'éléments tubulaires 1 réunis est stockée enroulée sur un tambour 10. Dans une variante non représentée, il peut s'agir d'un conteneur de stockage dans lequel les différents éléments de la structure sont repliés en accordéon.

Le dispositif comporte à l'extrémité du châssis opposée à celle portant le tambour 10 un poste d'injection comportant pour l'entraînement des éléments 1 un tambour moteur d'entraînement 11 d'axe horizontal au-dessus duquel sont disposés des rouleaux d'appui 12.

Pour le guidage et le positionnement précis d'une plaque d'injection 3 en regard de la tête d'injection 5, il est prévu dans la forme de réalisation représentée des guides de centrage 13 (figures 3 et 4) disposés de part et d'autre du trajet de déplacement des plaques d'injection 3. Pour détecter la position de la plaque d'injection en regard de la tête d'injecteur 5, il est prévu des palpeurs 14 dont le signal de sortie déclenche l'actionnement d'un verrou de blocage 15 de la plaque en position.

Chacun des verrous est à cet effet associé à un dispositif actionneur tel qu'un mécanisme à vérin 16.

La tête d'injection 5 est portée à l'extrémité d'une canne d'injection 17 mobile verticalement en va et vient, comme représenté par la flèche sur la figure 3 sous l'action d'un organe de manoeuvre tel qu'un vérin 18.

Un flexible d'amenée de produit injectable, notamment de ciment, 20 alimente l'injecteur et parvient au dispositif depuis la surface en étant guidé dans une structure de guidage en forme de trompette 21.

Pour le remplissage de chaque élément 1 de la structure, la plaque correspondante 3 est amenée en regard de la tête d'injecteur qui vient alors recouvrir l'orifice d'injection et une quantité dosée de ciment est injectée dans l'élément, un palpeur, par exemple mécanique (non représenté) permettant de contrôler que l'élément est convenablement rempli. On fait ensuite avancer le châssis 8 en déroulant la structure tubulaire jusqu'à ce que la plaque 3 de l'élément suivant soit amenée en regard de la tête de l'injecteur.

Dans la variante de réalisation illustrée aux figures 6 et 7, l'injecteur 5′ est fixe, le guidage de la plaque d'injection 3, qui porte latéralement les câbles de guidage 7, étant assuré par engagement desdits câbles dans des cavités de guidage longitudinales 22, ménagées dans le paroi intérieure de l'injecteur. Le plaque d'injection 3 comporte des joints d'étanchéité 23 dans la zone d'appui de l'injecteur 5′.

Dans ce mode de réalisation également, des verrous 15′ commandés par des mécanismes d'actionnement 16′ sont prévus pour immobiliser la plaque d'injection 3 en regard de l'orifice d'amenée de ciment et assurer l'étanchéité des joints 23 en pressant la plaque 3 contre la zone d'appui de l'injecteur 5′.

On se réfère maintenant aux figures 8 à 12 qui illustrent un autre mode de réalisation dans lequel la structure destinée à recouvrir une conduite ou un faisceau de conduites disposé sur le fond sous-marin est constituée d'éléments tubulaires 1′, disposés en chapelet avec un recouvrement entre les éléments successifs et des attaches 2 entre les différents éléments analogues à celles du mode de réalisation de la figure 1.

Dans ce mode de réalisation, chacun des éléments 1′ n'est pas muni directement d'une plaque d'injection, mais est prolongé par un tuyau 24 muni à son extrémité d'un embout 25 comportant un orifice d'injection 26 et un clapet anti-retour 27 comme on le voit le mieux sur la figure 10.

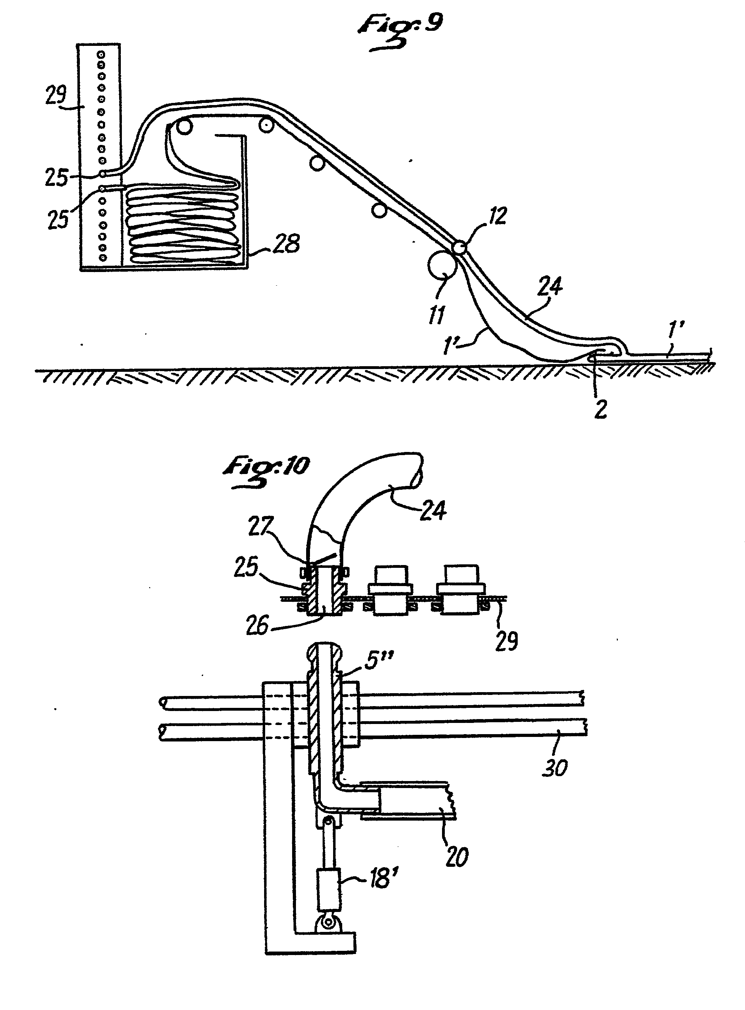

Dans une première forme de réalisation illustrée à la figure 9, les différents éléments 1′ sont stockés dans un conteneur 28 en étant pliés en accordéon, les différents embouts étant fixés de manière alignée sur une plaque de retenue 29 en regard de laquelle peut se déplacer sur des guides 30 prévus à cet effet, un injecteur 5″ déplaçable longitudinalement en va et vient par un mécanisme d'actionnement 18′.

L'injecteur est alimenté en ciment par une conduite souple 20 reliée à la surface.

Comme on le voit sur la figure 11a, pour réaliser l'injection, la tête de l'injecteur 5″ est amenée au contact de l'embout 25 retenu dans la plaque 29.

Après injection d'une quantité dosée de ciment, on fait avancer la tête d'injecteur 5″ par actionnement du mécanisme 18′ (figure 10) jusqu'à libérer l'embout 25 de la plaque 29 comme illustré à la figure 11b.

L'injecteur est alors déplacé en regard de l'embout 25 correspondant à l'élément 1′ à remplir ensuite.

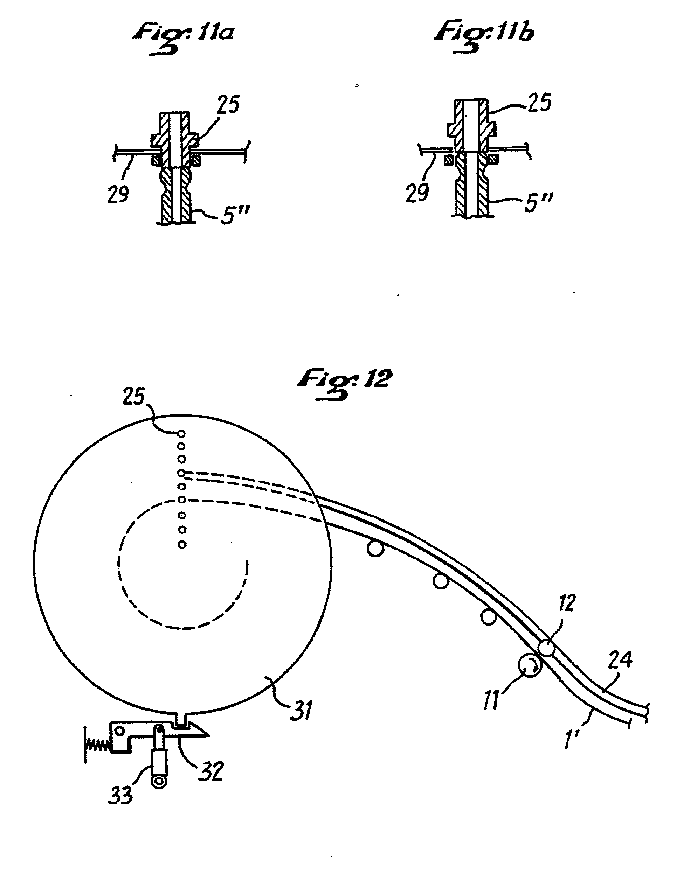

La forme de réalisation illustrée à la figure 12 diffère de celle de la figure 9 par le fait que les différents éléments sont stockés sur un tambour 31, les differents embouts 25 prolongeant le tuyau 24 étant fixés en une rangée disposée selon un rayon du tambour de stockage 31.

Un verrou de blocage 32 est prévu pour immobiliser le tambour dans la position d'injection, ce verrou étant libéré sous l'action d'un mécanisme d'actionnement 33.

Lorsque le tambour est ainsi immobilisé dans la position correspondant à l'alignement de l'injecteur avec la rangée d'embouts, l'injecteur étant déplaçable de la même façon que dans les fig. 10 et 11 avec des guides et un mécanisme d'actionnement, la connexion entre l'injecteur et l'embout et la libération de l'embout après injection peuvent s'effectuer comme décrit précédemment.

L'avance des différents éléments 1′ s'effectue dans les modes de réalisation des figures 9 à 12 de la même manière que pour le mode de réalisation des figures 1 à 5 à l'aide d'un tambour moteur d'entraînement 11, les éléments 1′ étant amenés en appui contre ce tambour 11 par de rouleaux presseurs 12.

Selon des caractéristiques non illustrées chacun des éléments tubulaires peut présenter au voisinage de son autre extrémité longitudinale un orifice d'injection réalisé dans les mêmes conditions que décrit ci-dessus. Le premier orifice devenant accessible lors de la mise en place de la structure, dit orifice "bas", permet d'effectuer une injection préliminaire partielle, par exemple de 100 et 500 kg de ciment, dans le but de stabiliser provisoirement l'élément que l'on met en place en attendant qu'il soit complètement rempli de ciment après achèvement de l'injection par le deuxième orifice.

En outre, quel que soit le mode de réalisation, la structure selon l'invention peut avantageusement être munie d'éléments pesants latéraux, tels que des lests en plomb, installés le long de chaque bord de la structure, pour stabiliser provisoirement la partie de structure posée au fond avant que l'injection de ciment soit réalisée dans la partie de structure concernée.

En outre bien que l'invention ait été décrite en liaison avec une structure de recouvrement la structure selon l'invention et son dispositif de mise en place peuvent être utilisés comme une fondation pour supporter un tuyau posé sur le fond sous-marin aux endroits ou, du fait de l'irrégularité du fond, le tuyau ne repose pas sur le fond. A cet effet on déroule et intercale des éléments de structure sous le tuyau dans une direction oblique ou perpendiculaire au tuyau et on les remplit de matériau durcissable. La fondation ainsi réalisée permet d'éviter les effets néfastes de flexion et de vibration du tuyau.

## Revendications

1. Structure de recouvrement notamment d'organes sous-marins de forme allongée, en particulier de conduites déposées sur le fond sous-marin, caractérisée par le fait qu'elle comporte une pluralité d'éléments tubulaires (1, 1′), aplatis, fermés, disposés en succession en étant réunis les uns aux autres par des moyens de fixation (2), de préférence à effort de rupture contrôlée, chacun des éléments comportant au moins un orifice (4, 26) pour l'injection d'un matériau durcissable, notamment du ciment.

2. Structure selon la revendication 1, caractérisée par le fait que les différents éléments se recouvrent partiellement au voisinage de leurs extrémités longitudinales.

3. Structure selon l'une quelconque des revendications 1 et 2, caractérisée par le fait que chacun des éléments tubulaires (1) présente au voisinage d'au moins une de ses extrémités longitudinales, dans l'une de ses faces, un orifice d'injection (4) réalisé dans une plaque (3) fixée sur l'élément à sa partie supérieure, agencée pour coopérer avec la tête d'un injecteur (5, 5').

4. Structure selon la revendication 3, caractérisée par le fait que chacune des plaques (3) comporte un clapet anti-retour (6).

5. Structure selon l'une quelconque des revendications 3 et 4, caractérisée par le fait qu'elle comprend des organes de guidage tels qu'au moins une paire de câbles de guidage longitudinaux (7) reliant entre elles les plaques d'injection (3) successives.

6. Structure selon l'une quelconque des revendications 1 et 2, caractérisée par le fait que chacun des éléments (1') est solidaire d'au moins un tuyau (24) muni à son extrémité d'un embout (25) comportant un orifice d'injection (26) et équipé de préférence d'un clapet anti-retour (27).

7. Structure selon la revendication 6, caractérisée par le fait que les différents embouts (25) sont disposés en une rangée sur/ou au voisinage de l'organe de stockage (28, 31) de la structure.

8. Dispositif pour la mise en place de la structure selon l'une quelconque des revendications précédentes comportant sur un châssis (8) mobile sur le fond sous-marin, un organe d'entraînement, notamment à tambour moteur (11) pour entraîner la structure (1, 1') depuis un organe de stockage tel qu'un conteneur (28) ou un tambour (10, 31) monté également sur le châssis du dispositif, un injecteur (5, 5', 5") alimenté par une ligne d'alimentation (20) en matériau durcissable, notamment en ciment et apte à coopérer avec chacun des orifices d'injection (4, 26) de la structure pour le remplissage de celle-ci, caractérisé par le fait qu'il comprend des moyens pour positionner successivement l'injecteur et chacun des orifices d'injection en regard les uns des autres et pour solidariser l'injecteur de l'orifice d'injection pendant la phase de remplissage.

9. Dispositif selon la revendication 8, pour la mise en place de la structure selon l'une quelconque des revendications 3 à 5, caractérisé par le fait qu'il comprend des moyens de guidage et de positionnement (7, 13, 14, 15, 15', 22) de chacune des plaques d'injection (3) en regard de l'injecteur (5, 5').

10. Dispositif selon la revendication 8, pour la mise en place de la structure selon l'une quelconque des revendications 6 et 7, caractérisé par le fait que l'injecteur (5") est monté sur un chariot mobile sur des guides (30) le long de la rangée d'embouts (25) d'injection alignés de façon à être amené en regard de chacun des embouts successifs.

11. Dispositif selon l'une quelconque des revendications 8 à 10, caractérisé par le fait que ledit injecteur (5, 5") est déplaçable axialement sous l'action d'un mécanisme d'actionnement (18, 18').

**Claims**

1. A covering structure, in particular for undersea devices of elongated shape, especially pipeline arranged on the sea floor, characterised in that it comprises a plurality of flat, closed tubular elements (1, 1') arranged in series and connected to one another by fixing means (2) preferably with controlled breaking stress, each of said elements comprising at least one orifice (4, 26) for the injection of a hardenable material, in particular cement.

2. A structure as claimed in Claim 1, characterised in that the different elements partially cover one another in the vicinity of their longitudinal ends.

3. A structure as claimed in any one of the Claims 1 and 2, characterised in that in the vicinity of at least one of its longitudinal ends each of the tubular elements (1) contains, in one of its surfaces, an injection orifice (4) formed in a plate (3) fixed to the upper part of the element and arranged so as to cooperate with the head of an injector (5, 5').

4. A structure as claimed in Claim 3, characterised in that each of the plates (3) comprises a nonreturn valve (6).

5. A structure as claimed in any one of the Claims 3 and 4, characterised in that it comprises guide elements, such as at least one pair of longitudinal guide cables (7) which interconnect the successive injection plates (3).

6. A structure as claimed in any one of the Claims 1 and 2, characterised in that each of the elements (1') is rigidly connected to at least one pipe (24) provided at its end with a socket (25) which comprises an injection orifice (26) and is preferably equipped with a non-return valve (27).

7. A structure as claimed in Claim 6, characterised in that the different sockets (25) are arranged in a row on or in the vicinity of the device (28, 31) for storing the structure.

8. A device for installing the structure as claimed in any one of the preceding Claims comprising, on a chassis (8) which is moveable on the sea floor, a drive device, in particular a motorized driving pulley (11) which drives the structure (1, 1') from a storage device such as a container (28) or a drum (10, 31) likewise mounted on the chassis of the device, an injector (5, 5', 5") fed by a feed line (20) with hardenable material, in particular cement and capable of cooperating with each of the injection orifices (4, 26) of the structure in order to fill the latter, it comprises means for successively positioning the injector and each of the injection orifices opposite one another and for locking the injector of the injection orifice during the filling phase.

9. A device as claimed in claim 8 for the installation of the structure as claimed in any one of the Claims 3 to 5, characterised in that it comprises means (7, 13, 14, 15, 15', 22) for guiding and positioning each of the injection plates (3) opposite the injector (5, 5').

10. A device as claimed in Claim 8, for the installation of the structure as claimed in any one of the Claims 6 and 7, characterised in that the injector (5") is mounted on a carriage which is movable on guides (30) along the row of injection sockets (25) aligned so as to be capable of being positioned opposite each of the successive sockets.

11. A device as claimed in any one of the Claims 8 to 10, characterised in that the said injector (5, 5") can be moved axially under the control of a control mechanism (18, 18').

## Patentansprüche

1. Abdeckungsanordnung, besonders für Unterwassereinrichtungen langgestreckter Form, insbesondere für auf dem Seeboden verlegte Leitungen, dadurch gekennzeichnet, daß sie eine Vielzahl von röhrenförmigen Elementen (1, 1') umfaßt, die abgeflacht, geschlossen, aufeinanderfolgend angeordnet und miteinander durch Befestigungseinrichtungen (2), vorzugsweise mit kontrollierter Bruchbelastbarkeit verbunden sind, wobei jedes der Elemente mindestens eine Öffnung (4, 26) zur Einspritzung von härtbarem Material, insbesondere von Zement aufweist.

2. Anordnung nach Anspruch 1, dadurch gekennzeichnet, daß die verschiedenen Elemente sich in der Nähe der Längsenden teilweise überlappen.

3. Anordnung nach einem der Ansprüche 1 und 2, dadurch gekennzeichnet, daß jedes der röhrenförmigen Elemente (1) in der Nähe mindestens einer seiner Längsenden in einer seiner Frontflächen eine Einspritzöffnung (4) aufweist, die in einer Platte (3) angebracht ist, die auf dem Element an seinem oben liegenden Teil befestigt und so gestaltet ist, daß sie mit dem Kopf einer Einspritzung (5, 5') zusammenwirkt.

4. Anordnung nach Anspruch 3, dadurch gekennzeichnet, daß jede der Platten (3) eine Rückschlagventilklappe (6) umfaßt.

5. Anordnung nach einem der Ansprüche 3 und 4, dadurch gekennzeichnet, daß sie Führungseinrichtungen umfaßt, wie zum Beispiel mindestens ein Paar Längsführungskabel (7), zur Verbindung aufeinanderfolgender Einspritzplatten (3).

6. Anordnung nach einem der Ansprüche 1 und 2, dadurch gekennzeichnet, daß jedes der Elemente (1') aus einem Stück mit einem Rohr oder Schlauch (24) besteht, das oder der an seinem Ende mit einem Ansatzstück (25) versehen ist, das eine Einspritzöffnung (26) aufweist und vorzugsweise mit einer Rückschlagventilklappe (27) ausgerüstet ist.

7. Anordnung nach Anspruch 6, dadurch gekennzeichnet, daß die verschiedenen Ansatzstücke (25) in einer Reihe auf der Lagereinrichtung (28, 31) der Anordnung oder in deren Nähe angeordnet sind.

8. Vorrichtung zur Verlegung der Anordnung nach einem der vorhergehenden Ansprüche, die auf einem beweglichen Gestell (8) auf dem Seeboden umfaßt: eine Antriebseinrichtung, insbesondere einen Trommelmotor (11), um die Anordnung (1, 1') von einer Lagereinrichtung, wie zum Beispiel einem Behälter (28) oder einer Trommel (10, 31), die ebenfalls auf dem Gestell der Vorrichtung angebracht ist, zu ziehen, eine Einspritzung (5, 5', 5"), die über eine Zuführleitung (20) mit härtbarem Material, insbesondere mit Zement gespeist wird und geeignet ist, um mit jeder der Einspritzöffnungen (4, 26) zusammenzuwirken, um die Anordnung auszufüllen, dadurch gekennzeichnet, daß sie Einrichtungen umfaßt, um aufeinanderfolgend jede der Einspritzöffnungen und die Einspritzung einander gegenüber zu positionieren und um die Einspritzung und die Einspritzöffnung während des Zeitraums des Auffüllens zusammenzubringen.

9. Vorrichtung nach Anspruch 8 zur Verlegung der Anordnung nach einem der Ansprüche 3 bis 5, dadurch gekennzeichnet, daß sie Führungs- und Positioniereinrichtungen (7, 13, 14, 15 15', 22) für jede der Einspritzplatten (3) gegenüber der Einspritzung (5, 5') umfaßt.

10. Vorrichtung nach Anspruch 8 zur Verlegung der Anordnung nach einem der Ansprüche 6 und 7, dadurch gekennzeichnet, daß die Einspritzung (5") auf einem beweglichen Untergestell, entlang der Reihe der Einspritz-Ansatzstücke (25) auf Führungen (30) angebracht ist, die auf solche Weise ausgerichtet sind, daß sie jedem der aufeinanderfolgenden Ansatzstücke gegenüber zuführbar ist.

11. Vorrichtung nach einem der Ansprüche 8 bis 10, dadurch gekennzeichnet, daß die Einspritzung (5, 5") mittels eines Betätigungsmechanismus (18, 18') axial verschiebbar ist.

EP 0 258 107 B1

*Fig.1*

*Fig.2*

*Fig.3*

*Fig.4*

Fig.5

*Fig: 6*

*Fig: 7*

*Fig: 8*

EP 0 258 107 B1

*Fig. 9*

*Fig. 10*

Fig. 11a

Fig. 11b

Fig. 12